# EUROPEAN PATENT SPECIFICATION

(11) **EP 3 558 742 B1**
(45) Date of publication and mention of the grant of the patent: **07.01.2026**
(21) Application number: 17882921.4
(22) Date of filing: 24.11.2017
(51) Int. Cl.: B60K 15/035, B62D 33/067, F17C 13/00, F17C 13/12

(54) **AN ARRANGEMENT FOR MOUNTING A BOIL-OFF PIPE OF A LIQUEFIED GAS FUEL SYSTEM TO A VEHICLE**
ANORDNUNG ZUR MONTAGE EINES VERDAMPFUNGSROHRS EINES FLÜSSIGGASKRAFTSTOFFSYSTEMS AN EIN FAHRZEUG
AGENCEMENT POUR LE MONTAGE D'UN TUYAU D'ÉVAPORATION D'UN SYSTÈME DE CARBURANT GAZEUX LIQUÉFIÉ SUR UN VÉHICULE

(30) Priority: 21.12.2016 SE 1651697
(43) Date of publication of application: 30.10.2019
(73) Proprietor: Scania CV AB, 151 87 Södertälje (SE)
(72) Inventor: LINDEBERG, Jonas, SE-852 39 Sundsvall (SE); NYQVIST, Erik, 584 22 Linköping (SE)
(74) Representative: Scania CV AB
(86) International application number: PCT/SE2017/051163
(87) International publication number: WO 2018/117927

(56) References cited:
- EP-A1- 0 078 348
- EP-A1- 3 509 887
- WO-A1-01/84035
- WO-A1-2014/098712
- WO-A1-2014/098712
- WO-A1-2017/211416
- DE-A1- 102009 057 563
- US-A- 3 151 695
- US-A- 4 378 945
- US-A- 4 378 945

## Description

### TECHNICAL FIELD

The invention relates to a vehicle comprising a liquefied gas fuel system and an arrangement for mounting a boil-off pipe of the liquefied gas fuel system.

### BACKGROUND ART

Alternative fuels such as natural gas and biogas are being introduced in vehicles such as heavy vehicles. For this purpose fuel systems for compressed natural gas, CNG and compressed biogas CBG and fuel systems for liquefied natural gas LNG and liquefied biogas LBG are being developed.

Systems for liquefied gas, i.e. LNG and LBG, require handling of relatively low temperatures, e.g. -130 degree Celsius at 10 bar for LNG, requiring certain conduits for transporting the liquefied natural gas and a certain tank for housing the fuel. When the vehicle is standing still and the engine is not operating the pressure in the tank will increase due to temperature increase in the tank. Therefore the system for liquefied gas is provided with a relief valve which according to an embodiment is set to open at 16 bar for evacuating evaporated gas.

The fuel tank/tanks for liquefied gas systems are usually arranged along and in connection to the vehicle frame. The evaporated gas is configured to be evacuated via a so called boil-off pipe connected to the fuel tank. The gas needs to be evacuated at a certain height. The boil-off pipe is further not allowed to project laterally or upwardly from the vehicle. For trucks the boil-off pipe is therefore usually arranged behind the cab of the truck. For trucks having a tiltable cabs, i.e. cabs arranged to be tilted forwardly, the boil-off pipe is according to a variant arranged to be connected to a vertical member arranged in connection to and at a distance from the rear side of the cab to avoid influence from the tilting.

Such a solution, however, takes up space behind the cab which otherwise could be used for overhang or semi-trailer in order to optimize the length of the load carrying part of the vehicle.

Document WO 2017211416 A1 is an application falling within the terms of Art. 54(3) EPC and relates to a gas venting pipe for a vehicle having a forward tiltable cab, which gas venting pipe comprises: a first pipe section mountable to a chassis of the vehicle; a second pipe section mountable to a rear wall of the forward tiltable cab of the vehicle; and a flexible magnet connection adapted to releasably interconnect the first and second pipe sections.

Also document EP 3509887 A1 is an application falling within the terms of Art. 54(3) EPC and relates to an arrangement for mounting a boil-off pipe of a liquefied gas fuel system to a vehicle having a tiltable cab. The pipe is attached to a rear side of the cab. The arrangement comprises a coupling configuration for providing a connection between a vehicle chassis-mounted tank of said system and said pipe in a non-tilted position of the cab and disconnecting the pipe from said connection in a tilted position of the cab. Said coupling configuration comprises a bellows configuration connected to said pipe, and a coupling element for receiving said bellows configuration in said non-tilted position. Said coupling element comprises a pipe opening through which pipe evaporated gas from said tank is arranged to be evacuated and for providing a connection for an external evacuation of said evaporated gas in said tilted position.

Document WO 2014/098712 discloses a vehicle having a tiltable cab and a vehicle chassis, and an air intake pipe arranged in connection to a rear side of the cab.

### OBJECTS OF THE INVENTION

An object of the present invention is to provide a vehicle comprising a liquefied gas fuel system and an arrangement for mounting a boil-off pipe of the liquefied gas fuel system wherein the vehicle has a tiltable cab which facilitates optimizing the length of a load carrying part of the vehicle and a safe and efficient tilting of the cab.

### SUMMARY OF THE INVENTION

These and other objects, apparent from the following description, are achieved by a vehicle as set out in the appended independent claims. Preferred embodiments of the vehicle are defined in appended dependent claims.

Specifically an object of the invention is achieved by a vehicle comprising a liquefied gas fuel system and an arrangement for mounting a boil-off pipe of the liquefied gas fuel system to the vehicle, said vehicle having a tiltable cab and a vehicle chassis. Said fuel system has a chassis-mounted liquefied gas fuel tank for providing fuel to the engine of the vehicle, wherein evaporated gas is arranged to be evacuated from said tank via said boil-off pipe at a certain tank pressure. Said boil-off pipe is arranged in connection to the rear side of the cab via a connection arrangement of said arrangement. According to the arrangement said connection arrangement comprises a coupling configuration for connecting the tank with the boil-off pipe in said non-tilted position of the cab and disconnecting the tank from the boil-off pipe in connection to the cab being tilted. Said coupling configuration comprises a first coupling element being connected to said boil-off pipe and a second coupling element for receiving said first coupling element in said non-tilted position. Said first coupling element is connected to the cab so that it is essentially not affected by cab movements relative to the vehicle chassis in the non-tilted position of the cab.

By thus connecting said first coupling element to the cab so that it is essentially not affected by cab movements relative to the vehicle chassis in the non-tilted position of the cab the risk of damages to said arrangement, cab and/or chassis are reduced. Hereby a relatively simple and cost efficient design of the first and second coupling elements is facilitated not requiring any bellows configuration or the like as there will be essentially no relative movements between the cab and the chassis in the non-tilted position of the cab, i.e. when the first and second coupling elements are coupled together. Further, the first and second coupling elements will hereby be efficiently and repeatedly aligned in connection to coupling of the first and second coupling elements, reducing the need for guide means in the respective coupling element.

The first coupling element is connected to a portion of the cab being fixedly connected to said vehicle chassis in said non-tilted position. Hereby an efficient way of providing a connection between the first and second coupling elements in which the first coupling element essentially is not affected by cab movements relative to the vehicle chassis in the non-tilted position of the cab is obtained, and thus an efficient way of not affecting said coupling configuration of said relative movements between cab and chassis is hereby obtained.

According to an embodiment said connection arrangement comprises means for connecting the first coupling element to said portion of the cab being fixedly connected to said vehicle chassis in the non-tilted position of the cab.

A locking arrangement is provided having a cab locking portion of the cab and a chassis locking portion of the chassis for locking the cab to the chassis in the non-tilted position of the cab, said cab locking portion being connected to a cab body of the cab via a spring configuration for allowing movement of said cab body relative to said cab locking portion, said first coupling element being arranged to be connected to said cab locking portion of said locking arrangement of said arrangement. By thus utilizing said locking arrangement and spring configuration an efficient way of providing a connection between the first and second coupling elements in which the first coupling element essentially is not affected by cab movements relative to the vehicle chassis in the non-tilted position of the cab is obtained, and thus an efficient way of not affecting said coupling configuration of said relative movements between cab and chassis is hereby obtained.

According to an embodiment of the arrangement one of said first coupling element and second coupling element comprises a conically shaped guide member and the other of said first coupling element and second coupling element comprises a conically shaped concave guide seat for facilitating connection of said first coupling element to said second coupling element.

According to an embodiment of the arrangement said boil-off pipe is connected to said tank via a flexible hose. By thus connecting the boil-off pipe to the tank via a flexible hose smooth coupling and decoupling of said coupling configuration is facilitated. The flexible hose has a length and flexibility to overcome certain movements during drive of the vehicle with the cab in the non-tilted, i.e. upright position. A first part of the flexible hose is connected to the tank and a second part of the flexible hose is connected to the boil-off pipe. The first part of the flexible hose is connected to the first coupling element and the second part of the flexible hose is connected to the second coupling element. The first part of the flexible hose is thus arranged to connect the first coupling element with the tank and the second part of the flexible hose is thus arranged to connect the second coupling element with the boil-off pipe. The first coupling element is connected to the tank via said first hose part. The second coupling element is connected to the boil-off pipe via said second hose part.

Specifically an object of the invention is achieved by a connection arrangement assembly comprising a chassis-mounted liquefied gas fuel tank, a cab-mounted boil-off pipe and a connection arrangement as set out herein, wherein said connection arrangement is arranged to operatively connect the gas fuel tank with the cab-mounted boil-off pipe when the cab is in a non-tilted position.

Specifically an object of the invention is achieved by a vehicle comprising an arrangement as set out herein.

Specifically an object of the invention is achieved by a vehicle comprising a connection arrangement assembly as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1a schematically illustrates a side view of a vehicle with a tiltable cab in a non-tilted position, the vehicle having an arrangement for mounting a boil-off pipe to the cab of the vehicle according to an embodiment of the present invention;
Fig. 1b schematically illustrates a side view of the vehicle in fig. 1a with the cab in a tilted position;
Fig. 2a schematically illustrates a rear view of an arrangement for mounting a boil-off pipe of a liquefied gas fuel system with a coupling configuration connected to a cab in a non-tilted position according to an embodiment of the present invention;
Fig. 2b schematically illustrates a rear view of the arrangement in fig. 2a in a tilted position of the cab according to an embodiment of the present invention;
Fig. 3 schematically illustrates a rear view of a vehicle cab and vehicle chassis of a vehicle comprising the arrangement in fig. 2a;
Fig. 4a-b schematically illustrates perspective views of a first coupling element of a coupling configuration of the arrangement in fig. 2a; and
Fig. 5a-b schematically illustrates perspective views of a second coupling element of the coupling configuration of the arrangement in fig. 2a.

### DETAILED DESCRIPTION

Hereinafter the term "liquefied gas" refers to liquefied natural gas, LNG, or liquefied biogas, LBG.

Hereinafter the term "liquefied gas fuel system" refers to a fuel system for liquefied natural gas, LNG, or a fuel system for liquefied biogas, LBG.

Hereinafter the term "flexible hose" refers to hoses configured to transport fluid for a liquefied gas fuel system, said hose being bendable to a certain degree and having a certain flexibility so as to facilitate taking up relative movements of a vehicle cab relative to a liquefied gas fuel tank.

Hereinafter the term "boil-off pipe" refers to a pipe, preferably a rigid pipe, configured to evacuate evaporated gas from a liquefied gas fuel tank of a liquefied gas fuel system. The pipe is according to an embodiment made of stainless steel. The boil-off pipe could alternatively be flexible such as a flexible hose.

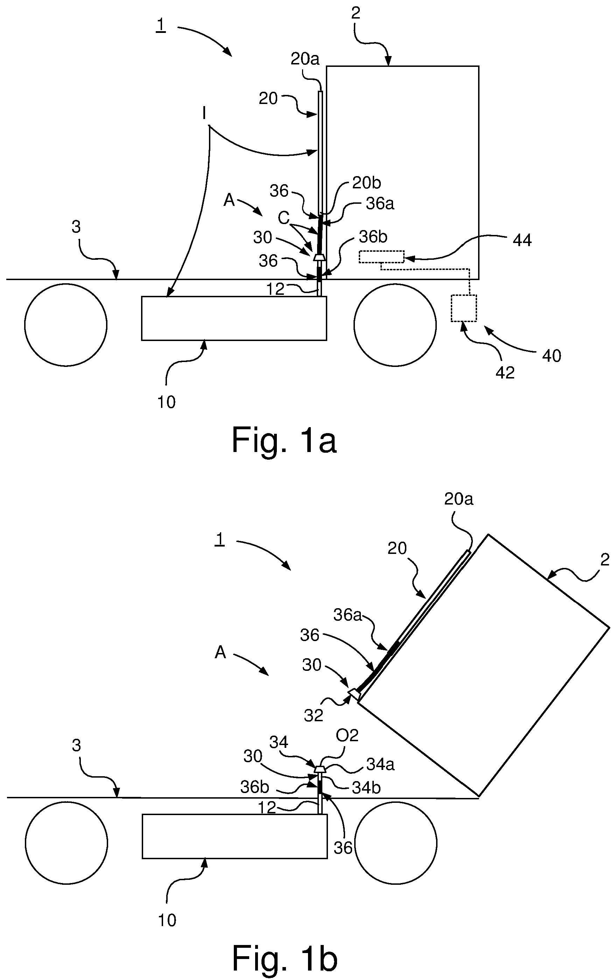

Fig. 1a schematically illustrates a side view of a vehicle 1 with a tiltable cab 2 in a non-tilted position; and fig. 1b schematically illustrates a side view of the vehicle 1 in fig. 1a with the cab 2 in a tilted position.

The vehicle has an arrangement A for mounting a for mounting a boil-off pipe of a liquefied gas fuel system I to the cab 2 of the vehicle 1 according to an embodiment of the present invention.

The vehicle 1 has a vehicle chassis 3. The cab 2 is tiltable relative to the vehicle chassis 3. Said cab 2 is movably connected to the vehicle chassis in a non-tilted position of said cab 2.

The exemplified vehicle 1 is a heavy vehicle in the shape of a truck. The vehicle 1 is fuelled by means of said liquefied gas fuel system I for operating the engine of the vehicle. The vehicle 1 may be any suitable truck configured to be arranged with a load carrying part behind the cab 2. Such a vehicle may be a truck arranged to carry an overhang behind the cab 2 or a semi-trailer truck comprising a towing truck and a semi-trailer coupled to the towing truck behind the cab 2 via a fifth wheel.

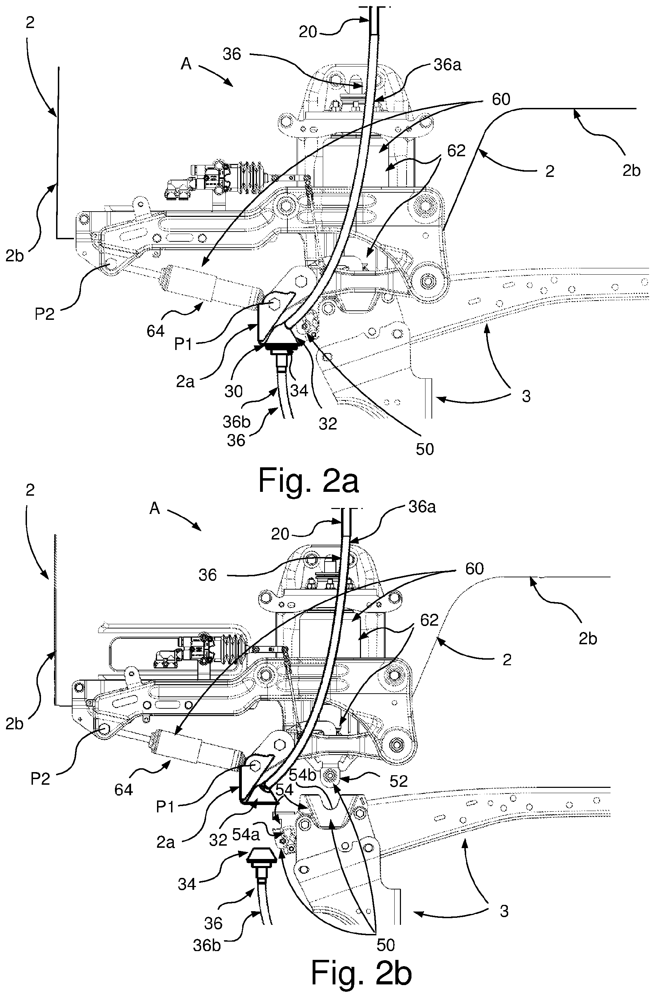

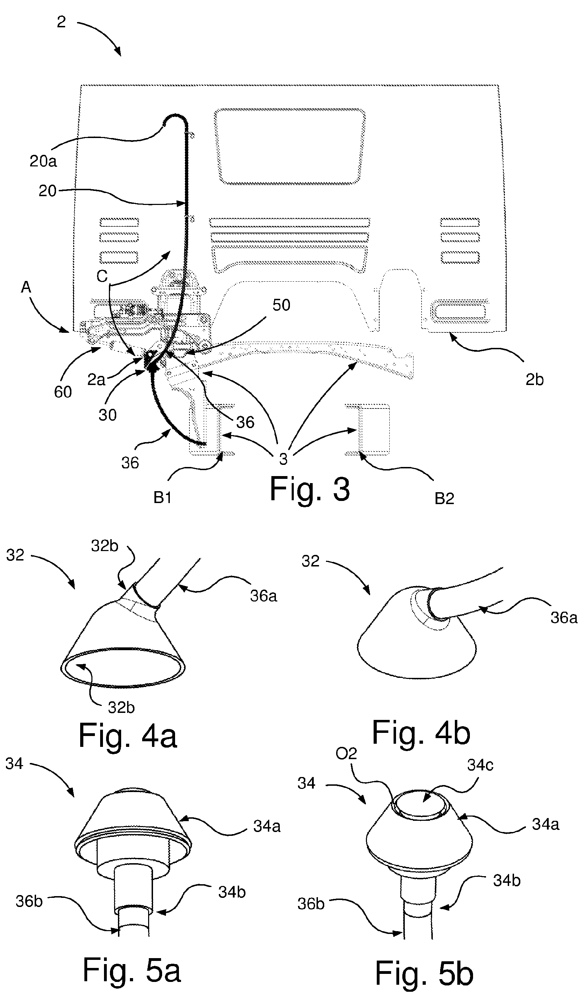

The cab 2 is tiltable between a non-tilted position, illustrated in fig. 1a, in which the cab is upright and the vehicle may be driven and a tilted position, illustrated in fig. 1b. In the non-tilted position, the cab 2 is locked by means of a cab locking arrangement comprising cab locking members, not shown. A locking arrangement is thus provided having a cab locking portion of the cab 2 and a chassis locking portion of the chassis 3 for locking the cab to the chassis in the non-tilted position of the cab. Said cab locking portion is connected to a cab body of the cab via a spring configuration for allowing movement of said cab body relative to said cab locking portion, not shown here, see fig. 2a-b and fig. 3 described below.

The cab 2 may be tilted in any suitable way by any tiltable means. The cab 2 is according to an embodiment tiltable by means of a cab tilting operation arrangement 40 shown in fig. 1a. The cab tilting operation arrangement 40 comprises a pump unit 42 and at least one hydraulic piston unit 44 for tilting the cab 2, hydraulically connected to the pump unit 42 via a hydraulic line.

The vehicle thus comprises a liquefied gas fuel system I. Said liquefied gas fuel system I comprises a chassis-mounted liquefied gas fuel tank 10 for providing fuel to the engine of the vehicle 1. Said liquefied gas fuel system I comprises said boil-off pipe 20 through which evaporated gas from the tank 10 is configured to be evacuated at a certain tank pressure. The boil-off pipe 20 is configured to be connected to the fuel tank 10. The system for liquefied gas is provided with a relief valve, not shown, which is set to open at said certain pressure, said pressure according to an embodiment being about 16 bar, for evacuating evaporated gas from the tank 10 via the boil-off pipe 20. Said pressure may depend on the size of the tank.

The vehicle 1 illustrated in fig. 1a-b is a simplified illustration. The vehicle chassis of the vehicle 1 normally comprises a vehicle frame comprising a left longitudinal vehicle beam and a right longitudinal vehicle beam, not shown. The liquefied gas fuel tank 10 is arranged in connection to the vehicle frame. The liquefied gas fuel tank 10 may according to an embodiment comprise a left liquefied gas fuel tank part arranged in connection to a left longitudinal vehicle beam and a right liquefied gas fuel tank part arranged in connection to the right longitudinal beam of the chassis of the vehicle 1. Fig. 2a-b and fig. 3 illustrates an example of part of such a vehicle including the cab/parts of the cab and chassis/parts of the chassis.

The vehicle comprises an arrangement A for mounting the boil-off pipe 20 of said liquefied gas fuel system I to the vehicle. The arrangement A for mounting the boil-off pipe 20 to the vehicle 1 comprises a connection arrangement C. The boil-off pipe 20 is arranged in connection to a rear side of the cab 2 via said connection arrangement C, said boil-off pipe 20 being attached to the rear side of the cab 2

Said connection arrangement C comprises a coupling configuration 30 for connecting the tank with the boil-off pipe 20.

The boil-off pipe 20 is thus configured to be connected to the fuel tank 10 via said coupling configuration 30. The coupling configuration 30 is according to an embodiment connected to a pipe 12 of the tank 10. Said relief valve is according to an embodiment arranged in connection to said pipe 12.

The boil-off pipe 20 is attached to the rear side of the cab 2. The boil-off pipe 20 is arranged to be fixedly attached to the rear side of the cab 2 by means of any suitable attachment means, e.g. any suitable joints such as one or more screw joints. The boil-off pipe 20 is thus arranged to be tilted together with the cab 2 when the cab 2 is tilted to the tilted position.

The boil-off pipe 20 has an upper side 20a with an opening through which said evaporated gas is arranged to be evacuated and an opposing lower side 20b configured to be connected to the tank 10 via said coupling configuration 30 in the non-tilted position of the cab 2.

The coupling configuration 30 is arranged to provide a chassis based connection with the boil-off pipe 20 in the non-tilted position of the cab 2 and disconnecting the pipe 20 from the chassis based connection in a tilted position of the cab 2. The coupling configuration 30 is arranged for connecting the tank 10 with the boil-off pipe 20 in a non-tilted position of the cab and disconnecting the tank 10 from the boil-off pipe 20 when the cab 2 is tilted to the tilted position.

The coupling configuration 30 for connecting the tank 10 with the boil-off pipe 20 comprises according to an embodiment a first coupling element 32 connected to the boil-off pipe and a second coupling element 34 connected to the tank 10. In the non-tilted position of the cab 2 the first coupling element 32 and the second coupling element 34 are coupled to each other and in the tilted position of the cab 2 the first coupling element 32 and the second coupling element 34 are de-coupled from each other. The first coupling element 32 and the second coupling element 34 could be any suitable members connectable such that gas may be evacuated via said coupling configuration 30, i.e. such that gas may be evacuated via said first coupling element 32 and second coupling element 34 when coupled together in said non-tilted position of the cab 2. An embodiment of the first coupling element 32 is illustrated in fig. 4a-b and an embodiment of the second coupling element is illustrated in fig. 5a-b, said embodiments of the first and second coupling elements 32, 34 being arranged to provide a coupling within said coupling configuration 30 and thus fitting each other in the non-tilted position of the cab 2.

Said boil-off pipe 20 is connected to the tank 10 via flexible hose 36. The flexible hose 36 is connected to the tank 10 via said pipe 12. The flexible hose 36 is arranged to be connected to the boil-off pipe 20 via said coupling configuration 30 in said non-tilted position of the cab 2. The flexible hose 36 comprises a first hose part 36a connected to the tank 10 via said pipe 12 and a second hose part 36b connected to said boil-off pipe 20.

The first coupling element 32 is connected to the boil-off pipe 20 via said first hose part 36a. The second coupling element 34 is connected to the tank 10 via said second hose part 36b.

The connection arrangement C comprises according to an embodiment the flexible hose 36 connected to the tank 10 and to the boil-off pipe 20.

As shown schematically in fig. 1b said second coupling element 34 comprises a pipe opening O2 of a pipe through which pipe and thus opening O2 said evaporated gas from said tank 10 is arranged to be evacuated and for providing a connection for e.g. a flexible hose, not shown, for an external evacuation of said evaporated gas in said tilted position of the cab 2. Such an extra flexible hose or the like could be attached to the second coupling element in any suitable way.

Said first coupling element 32 is connected to the cab 2 so that it is essentially not affected by cab movements relative to the vehicle chassis 3 in the non-tilted position of the cab 2. Embodiments of this connection is described in more detail in fig. 2a-b and fig. 3. Thus, said first coupling element 32 of the coupling configuration 30 is described in more detail below with reference to fig. 4a-b and said guide member 34 of the coupling configuration 30 is described in more detail below with reference to fig. 5a-b.

The vehicle 1 in fig. 1a-b comprises a connection arrangement assembly 10, 20, C comprising said chassis-mounted liquefied gas fuel tank 10, said cab-mounted boil-off pipe 20 and said connection arrangement C, wherein said connection arrangement C is arranged to operatively connect the gas fuel tank 10 with the cab-mounted boil-off pipe 20 when the cab 2 is in the non-tilted position. Thus, said chassis-mounted liquefied gas fuel tank 10, said cab-mounted boil-off pipe 20 and said connection arrangement C provides a connection arrangement assembly 10, 20, C, wherein said connection arrangement C is arranged to operatively connect the gas fuel tank 10 with the cab-mounted boil-off pipe 20 when the cab 2 is in the non-tilted position.

Fig. 2a schematically illustrates a rear view of an arrangement A for mounting a boil-off pipe 20 of a liquefied gas fuel system with a coupling configuration 30 connected to a cab 2 in a non-tilted position according to an embodiment of the present invention, and fig. 2a schematically illustrates a rear view of the arrangement A in fig. 2a in a tilted position of the cab 2 according to an embodiment of the present invention. A portion of the boil-off pipe 20 is shown in fig. 2a-b.

The cab is thus tiltable between a non-tilted position illustrated in fig. 2a and a tilted position illustrated in fig. 2b. The vehicle has a vehicle chassis 3 of which portions are shown in fig. 1a-b. The cab is movably connected to the vehicle chassis 3 in the non-tilted position of said cab 2.

Said boil-off pipe, not shown here, see fig. 3, is attached to the rear side of the cab 2 via a connection arrangement C of said arrangement A. The connection arrangement C comprises a coupling configuration 30 for connecting the tank, not shown here, see fig. 3, with the boil-off pipe via a flexible hose 36 in said non-tilted position of the cab 2 and disconnecting the tank from the boil-off pipe in connection to the cab 2 being tilted.

The coupling configuration 30 comprises a first coupling element 32 connected to said boil-off pipe via a first hose part 36a of said flexible hose 36 and a second coupling element 34 connected to said tank via a second hose part 36b of said flexible hose 36.

The first coupling element 32 is arranged to receive said second coupling element 34 in said non-tilted position of the cab 2 as illustrated in fig. 2a. An embodiment of the first coupling element 32 is described in more detail in fig. 4a-b and an embodiment of the second coupling element 34 is described in more detail in fig. 5a-b.

The first coupling element 32 is arranged to be connected to the cab 2 so that it is essentially not affected by movements of the cab 2 relative to the vehicle chassis 3 in the non-tilted position of the cab 2.

The first coupling element 32 is thus connected to a cab portion 2a of the cab which is fixedly connected to the vehicle chassis 3 in said non-tilted position of the cab 2.

The vehicle comprises a locking arrangement 50 for locking the cab 2 to the vehicle chassis 3 in the non-tilted position of the cab 2. The locking arrangement 50 is operable between a locked position and an unlocked position. The locking arrangement 50 comprises a cab locking portion 52 of the cab 2 and a chassis locking portion 54 of the chassis 3 for locking the cab 2 to the chassis 3 in the non-tilted position of the cab 2. The cab locking portion 52 has a protrusion with an engagement portion, not shown, for engaging with the chassis locking portion 54 in the locked state. The chassis locking portion 54 comprises a lock-release actuator 54a for actuating a locking mechanism, not shown, for engaging with said engagement portion 52a for providing the locked position and disengaging from the engagement portion 52a for providing the unlocked position. The chassis locking portion 54 has a recess portion 54b arranged to receive the cab locking portion 52 for locking the cab 2 to the chassis in the non-tilted position of the cab 2 by means of said locking mechanism engaging with said engagement portion of the cab locking portion 52. The locking arrangement 50 is according to an embodiment comprised in said arrangement A. The locking arrangement described with reference to fig. 2a-b is only an example. The locking arrangement could be any suitable locking arrangement for locking the cab 2 to the vehicle chassis 3 in the non-tilted position of the cab 2.

The cab locking portion 52 is connected to a cab body 2b of the cab 2 via a spring configuration 60 for allowing movement of said cab body 2b relative to said cab locking portion 52. Thus, the spring configuration 60 is arranged in connection to the cab portion 2a of the cab 2 and the cab body 2b of the cab 2 such that the cab body is allowed to move relative to the cab portion 2a when the cab 2 is in the non-tilted position and thus connected to the vehicle chassis 3 by means of said locking arrangement 50. Thus, the spring configuration 60 is configured to allow movement of the cab body 2b relative to the cab portion 2a and vehicle chassis 3 in the non-tilted position of the cab 2 illustrated in fig. 2a. The spring configuration 60 is according to an embodiment comprised in said arrangement A. The spring configuration 60 described with reference to fig. 2a-b below is only an example. The spring configuration could be any suitable spring configuration for allowing movement of said cab body 2b relative to said cab locking portion in the non-tilted position of the cab 2.

The spring configuration 60 comprises a spring unit 62 configured to allow movement of the cab body 2b relative to the cab portion 2a and vehicle chassis 3 in the non-tilted position of the cab 2, particularly vertical movement of e cab body 2b relative to the cab portion 2a and vehicle chassis 3 in the non-tilted position of the cab 2. The spring unit 62 comprises according to this embodiment a cylindrically shaped spring member, here an air spring member, with a damper member/shock absorber arranged inside for providing a damping function.

The spring configuration 60 comprises a lateral damper unit 64 at one end attached to a fastening point P1 of the cab portion 2a and at an opposite end attached to a fastening point P2 of said cab body 2b. The lateral damp unit comprises a cylinder and a piston. The lateral damper unit 64 is arranged to damp lateral cab movements and is thus arranged to allow movement of the cab body 2b relative to the cab portion 2a and hence vehicle chassis 3.

Said first coupling element 32 is connected to said cab locking portion 52 of said locking arrangement 50 of said arrangement A. Said first coupling element 32 is connected to said cab locking portion 52 via said cab portion 2a. Said first coupling element 32 is thus attached to said cab portion 2a.

The vehicle comprises said locking arrangement 50 for locking the cab 2 to the vehicle chassis 3 in the non-tilted position of the cab 2.

The vehicle comprises said spring configuration 60 for allowing relative movement of the cab body 2b relative to the cab portion 2a.

Fig. 3 schematically illustrates a rear view of a vehicle cab 2 and vehicle chassis 3 of a vehicle comprising the arrangement A in fig. 2a.

The arrangement A is thus arranged for mounting a boil-off pipe 20 of a liquefied gas fuel system to a chassis-mounted liquefied gas fuel tank, not shown, of the system by means of said coupling configuration 30 of the arrangement A.

The vehicle chassis 3 comprises a vehicle frame B1, B2, comprising a left longitudinal vehicle beam B1 and a right longitudinal vehicle beam B2. Said liquefied gas fuel tank is according to an embodiment arranged to be connected to a longitudinal beam, here the left longitudinal beam B1 of the vehicle chassis 3. According to an embodiment the liquefied gas fuel system comprises two liquefied gas fuel tanks, in which case the other tank is connected to the other longitudinal beam.

The liquefied gas fuel tank is arranged to provide fuel to the engine of the vehicle, wherein evaporated gas is arranged to be evacuated from said tank via an end portion 20a of said boil-off pipe 20 at a certain tank pressure.

The boil-off pipe 20 is attached to the rear side of the cab 2 via a connection arrangement C of said arrangement A.

Fig. 4a-b schematically illustrates perspective views of a first coupling element 32 of a coupling configuration 30 of the arrangement A in fig. 1a-b.

The first coupling element 32 is configured to be connected to the boil-off pipe via said flexible hose 36, i.e. the first hose part 36a of the flexible hose 36.

The first coupling element 32 comprises a conically shaped concave guide seat 32a for facilitating connection of said first coupling element 32 to the second coupling element 34 illustrated in fig. 5a-b described below. The conically shaped concave guide seat 32a is thus tapering inwardly from the lower end of the first coupling element 32.

The conically shaped concave guide seat 32a thus has a funnel-shape arranged upside down when the first coupling element 32 is attached to the cab, i.e. attached to the portion of the cab being fixedly connected to the vehicle chassis in the non-tilted position of the cab as described above with reference to fig. 2a-b and 3.

The first coupling element 32 comprises an upper connection portion 32b arranged at the upper side of the first coupling element 32 for connection to the boil-off pipe via said hose part 36a of the flexible hose.

Fig. 5a-b schematically illustrates perspective views of a second coupling element 34 of the coupling configuration 30 of the arrangement A in fig. 1a-b.

Said second coupling element 34 comprises a conically shaped guide member 34a arranged in the upper portion of the second coupling element 34. Said conically shaped guide member 34a of the second coupling element has a shape for facilitating connection of said first coupling element 32 to said second coupling element 34 by providing guiding into the conically shaped concave guide seat 32a of the first coupling element 32 when the cab of the vehicle is moved from a tilted position to a non-tilted position.

The conically shaped guide member 34a arranged in the upper portion of the second coupling element 34 provides an opening O3 in the upper portion of the conically shaped guide member 34a.

The conically shaped concave guide seat 32a of the first coupling element 32 is arranged to co-act with the conically shaped guide member 34a of the second coupling element 34 in the non-tilted of the cab such that coupling of the first coupling element 32 and the second coupling element 34 and thus connection between the tank and the boil-off pipe is efficiently maintained.

In the coupled state of the coupling configuration 30, i.e. in the non-tilted state of the cab, the conically shaped concave guide seat 32a of the first coupling element 32 and the conically shaped guide member 34a of the second coupling element 34 are configured to be aligned, here essentially coaxially aligned. The alignment is facilitated by the first coupling element 32 being connected to said portion of the cab being fixedly connected to said vehicle chassis in said non-tilted position as described with reference to fig. 2a-b and 3.

Said second coupling element 34 comprises a pipe 34b with an upper portion having a pipe opening O2 and a lower portion for connection to the flexible hose, i.e. the second part 36b of the flexible hose as described with reference to fig. 1a-b, for connection to the tank.

Evaporated gas from said tank 10 is arranged to be evacuated through said pipe 34b.

Said conically shaped guide member 34a of the second coupling element 34 is arranged around said pipe opening O2.

Said second coupling element 34 comprises a cover element 34c removably arranged in connection to said pipe opening O2 for covering said pipe opening O2.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated and as defined in the appended claims.

## Claims

1. A vehicle (1) comprising a liquefied gas fuel system (I) and an arrangement (A) for mounting a boil-off pipe (20) of the liquefied gas fuel system (I) to the vehicle (1), said vehicle having a tiltable cab (2) and a vehicle chassis (3), said cab being movably connected to the vehicle chassis (3) in a non-tilted position of said cab, said fuel system having a chassis-mounted liquefied gas fuel tank (10) for providing fuel to the engine of the vehicle (1), wherein evaporated gas is arranged to be evacuated from said tank (10) via said boil-off pipe (20) at a certain tank pressure, said boil-off pipe (20) being arranged in connection to a rear side of the cab (2) via a connection arrangement (C) of said arrangement (A), **characterized in that** said boil-off pipe (20) is attached to the rear side of the cab (2), wherein said connection arrangement (C) comprises a coupling configuration (30) for connecting the tank with the boil-off pipe (20) in said non-tilted position of the cab (2) and disconnecting the tank (10) from the boil-off pipe (20) in connection to the cab (2) being tilted, said coupling configuration (30) comprising a first coupling element (32) being arranged to be connected to said boil-off pipe (20) and a second coupling element (34) for receiving said first coupling element (32) in said non-tilted position, wherein said first coupling element (32) is connected to a portion (2a) of the cab being fixedly connected to said vehicle chassis (3) in said non-tilted position, said first coupling element (32) thus being connected to the cab (2) so that it is essentially not affected by cab movements relative to the vehicle chassis (3) in the non-tilted position of the cab (2), wherein a locking arrangement (50) being provided having a cab locking portion (52) of the cab and a chassis locking portion (54) of the chassis for locking the cab (2) to the chassis (3) in the non-tilted position of the cab (2), said cab locking portion (52) being connected to a cab body (2b) of the cab (2) via a spring configuration (60) for allowing movement of said cab body relative to said cab locking portion (52), said first coupling element (32) being connected to said cab locking portion (52) of said locking arrangement (50) of said arrangement (A).

2. The vehicle (1) according to claim 1, wherein said first coupling element (32) being connected to said boil-off pipe (20) via a flexible hose (36).

3. The vehicle (1) according to any of claims 1-2, wherein one of said first coupling element (32) and second coupling element (34) comprises a conically shaped guide member (34a) and the other of said first coupling element (32) and second coupling element (34) comprises a conically shaped concave guide seat (32a) for facilitating connection of said first coupling element (32) to said second coupling element (34).

4. The vehicle (1) according to any of claims 1-3, wherein said connection arrangement (C) is arranged to operatively connect the gas fuel tank (10) with the cab-mounted boil-off pipe (20) when the cab (2) is in a non-tilted position.

## Patentansprüche

1. Fahrzeug (1) mit einem Flüssiggas-Kraftstoffsystem (I) und einer Anordnung (A) zum Befestigen einer Verdampfungsleitung (20) des Flüssiggas-Kraftstoffsystems (I) an dem Fahrzeug (1), wobei das Fahrzeug eine kippbare Kabine (2) und ein Fahrzeugchassis (3) aufweist, wobei in einer nicht gekippten Position der Kabine beweglich mit dem Fahrzeugchassis (3) verbunden ist, wobei das Kraftstoffsystem einen am Chassis befestigten Flüssiggas-Kraftstofftank (10) zur Versorgung des Motors des Fahrzeugs (1) mit Kraftstoff aufweist, wobei verdampftes Gas so angeordnet ist, dass es bei einem bestimmten Tankdruck aus dem Tank (10) über die Verdampfungsleitung (20) abgeleitet wird, wobei die Verdampfungsleitung (20) in Verbindung mit einer Rückseite der Kabine (2) über eine Verbindungsanordnung (C) der Anordnung (A) angeordnet ist, **dadurch gekennzeichnet, dass** die Verdampfungsleitung (20) an der Rückseite der Kabine (2) angebracht ist, wobei die Verbindungsanordnung (C) eine Kopplungskonfiguration (30) umfasst, um den Tank mit der Verdampfungsleitung (20) in der nicht gekippten Position der Kabine (2) zu verbinden und den Tank (10) von der Verdampfungsleitung (20) in Verbindung mit der gekippten Kabine (2) zu trennen, wobei die Kopplungskonfiguration (30) ein erstes Kopplungselement (32), das so angeordnet ist, dass es mit der Verdampfungsleitung (20) verbunden ist, und ein zweites Kopplungselement (34) zum Aufnehmen des ersten Kopplungselements (32) in der nicht gekippten Position umfasst, wobei das erste Kopplungselement (32) mit einem Abschnitt (2a) der Kabine verbunden ist, der fest mit dem Fahrzeugchassis (3) in der nicht gekippten Position verbunden ist, wobei das erste Kopplungselement (32) somit mit der Kabine (2) verbunden ist, so dass es im Wesentlichen nicht von Kabinenbewegungen relativ zum Fahrzeugchassis (3) in der nicht gekippten Position der Kabine (2) beeinträchtigt wird, wobei eine Verriegelungsanordnung (50) vorgesehen ist mit einem Kabinenverriegelungsabschnitt (52) der Kabine und einem Chassisverriegelungsabschnitt (54) des Chassis zum Verriegeln der Kabine (2) mit dem Chassis (3) in der nicht gekippten Position der Kabine (2), wobei der Kabinenverriegelungsabschnitt (52) über eine Federanordnung (60) mit einem Kabinenkörper (2b) der Kabine (2) verbunden ist, um eine Bewegung des Kabinenkörpers relativ zu dem Kabinenverriegelungsabschnitt (52) zu ermöglichen, wobei das erste Kopplungselement (32) mit dem Kabinenverriegelungsabschnitt (52) der Verriegelungsanordnung (50) der Anordnung (A) verbunden ist.

2. Fahrzeug (1) gemäß Anspruch 1, wobei das erste Kopplungselement (32) über einen flexiblen Schlauch (36) mit der Verdampfungsleitung (20) verbunden ist.

3. Fahrzeug (1) gemäß einem der Ansprüche 1-2, wobei eines des ersten Kopplungselements (32) und zweiten Kopplungselements (34) ein konisch geformtes Führungselement (34a) und das andere des ersten Kopplungselements (32) und zweiten Kopplungselements (34) einen konisch geformten konkaven Führungssitz (32a) umfasst, um eine Verbindung des ersten Kopplungselements (32) mit dem zweiten Kopplungselement (34) zu erleichtern.

4. Fahrzeug (1) gemäß einem der Ansprüche 1-3, wobei die Verbindungsanordnung (C) so angeordnet ist, dass der Gaskraftstofftank (10) funktionsfähig mit der an der Kabine angebrachten Verdampfungsleitung (20) verbunden ist, wenn sich die Kabine (2) in einer nicht gekippten Position befindet.

## Revendications

1. Véhicule (1) comprenant un système de gaz combustible liquéfié (I) et un agencement (A) pour le montage d'une conduite d'évaporation (20) du système de gaz combustible liquéfié (I) sur le véhicule (1). ledit véhicule ayant une cabine inclinable (2) et un châssis de véhicule (3), ladite cabine étant connectée de manière mobile au châssis de véhicule (3) dans une position non inclinée de ladite cabine, ledit système de combustible ayant un réservoir (10) de gaz combustible liquéfié monté sur châssis pour fournir du combustible au moteur du véhicule (1), dans lequel le gaz évaporé est agencé pour être évacué dudit réservoir (10) via ladite conduite d'évaporation (20) à une certaine pression de réservoir, ladite conduite d'évaporation (20) étant agencée en connexion avec un côté arrière de la cabine (2) via un agencement de connexion (C) dudit agencement (A), **caractérisé en ce que** ladite conduite d'évaporation (20) est fixé au côté arrière de la cabine (2), dans lequel ledit agencement de connexion (C) comprend une configuration de couplage (30) pour connecter le réservoir à la conduite d'évaporation (20) dans ladite position non inclinée de la cabine (2) et déconnecter le réservoir (10) de la conduite d'évaporation (20) en connexion avec la cabine (2) qui est inclinée, ladite configuration de couplage (30) comprenant un premier élément de couplage (32) qui est agencé pour être connecté à ladite conduite d'évaporation (20) et un deuxième élément de couplage (34) pour recevoir ledit premier élément de couplage (32) dans ladite position non inclinée, dans lequel ledit premier élément de couplage (32) est connecté à une portion (2a) de la cabine qui est connectée de manière fixe audit châssis de véhicule (3) dans ladite position non inclinée, ledit premier élément de couplage (32) étant ainsi connecté à la cabine (2) de sorte qu'il n'est essentiellement pas affecté par les mouvements de la cabine par rapport au châssis du véhicule (3) dans la position non inclinée de la cabine (2), dans lequel un agencement de verrouillage (50) est fourni ayant une portion de verrouillage de cabine (52) de la cabine et une portion de verrouillage de châssis (54) du châssis pour verrouiller la cabine (2) au châssis (3) dans la position non inclinée de la cabine (2), ladite portion de verrouillage de cabine (52) étant connectée à un corps de cabine (2b) de la cabine (2) via une configuration de ressort (60) pour permettre le mouvement dudit corps de cabine par rapport à ladite portion de verrouillage de cabine (52), ledit premier élément de couplage (32) étant connecté à ladite portion de verrouillage de cabine (52) dudit agencement de verrouillage (50) dudit agencement (A) .

2. Véhicule (1) selon la revendication 1, dans lequel ledit premier élément de couplage (32) est relié à ladite conduite d'évaporation (20) par l'intermédiaire d'un tuyau flexible (36).

3. Véhicule (1) selon l'une quelconque des revendications 1 et 2, dans lequel l'un dudit premier élément de couplage (32) et dudit deuxième élément de couplage (34) comprend un organe de guidage de forme conique (34a) et l'autre dudit premier élément de couplage (32) et dudit deuxième élément de couplage (34) comprend un siège de guidage concave de forme conique (32a) pour faciliter la connexion dudit premier élément de couplage (32) audit deuxième élément de couplage (34).

4. Véhicule (1) selon l'une quelconque des revendications 1 à 3, dans lequel ledit agencement de connexion (C) est agencé pour connecter de manière fonctionnelle le réservoir de gaz combustible (10) à la conduite d'évaporation (20) monté sur la cabine lorsque la cabine (2) est dans une position non inclinée.
